Europäisches Patentamt

(19) European Patent Office

Office européen des brevets

(11) Publication number : **0 334 672 B1**

# EUROPEAN PATENT SPECIFICATION

(12)

(45) Date of publication of patent specification :
**25.11.92 Bulletin 92/48**

(21) Application number : **89302960.3**

(22) Date of filing : **23.03.89**

(51) Int. Cl.⁵ : **B60K 20/02, B60R 25/04**

(54) **Mechanical interlock devices.**

(30) Priority : **25.03.88 US 173368**

(43) Date of publication of application :
**27.09.89 Bulletin 89/39**

(45) Publication of the grant of the patent :
**25.11.92 Bulletin 92/48**

(84) Designated Contracting States :
**DE ES FR GB IT**

(56) References cited :
**GB-A- 1 532 791**
**US-A- 3 540 313**
**US-A- 4 089 394**

(73) Proprietor : **BABCOCK INDUSTRIES INC.**
**26500 Haggerty Road P.O. Box 2416**
**Farmington Hills Michigan 48333-2416 (US)**

(72) Inventor : **Newman, Gordon Arthur Newman**
**3787 N. Adrian Highway**
**Michigan (US)**
Inventor : **Gilmore, William John**
**Manitou Beach**
**Michigan (US)**

(74) Representative : **Lewis, David Overington**
**Babcock International plc 217 Tabard Street**
**London SE1 4UR (GB)**

EP 0 334 672 B1

## Description

This invention relates to mechanical interlock devices arranged to be effective to restrain movement of one positionable mechanism between a first position and a second position dependent upon the position of another, associated, positionable mechanism, and, more particularly, to a mechanical interlock device for a motor vehicle ignition key lock and automatic gear selector lever.

In motor vehicles equipped with an automatic gear train selector it is highly desirable to ensure that when starting the engine or when switching off the engine and removing the ignition key from the lock the gear train is in a dis-engaged or PARK configuration.

Accordingly, an objective of the present invention is to provide a key interlock device that functions between the ignition key lock and the automatic gear selection lever to prevent removal of the key from the ignition key lock, except when the automatic gear selection lever is in a PARK position and also to prevent movement of the automatic gear selection lever from the PARK position except when the key ignition lock is rotated to a RUN position, which device is relatively simple and utilizes a minimum number of parts whilst having a positive action not readily bypassed and which is low in cost.

Thus, according to the present invention there is provided a mechanical interlock device arranged to be effective to restrain movement of one positionable mechanism between a first position and a second position dependent upon the position of another, associated, positionable mechanism, in which the one mechanism includes a slide bar axially reciprocable between the first and second positions and formed with a detent in a face portion thereof, and a pawl pivotable against a resilient bias from a dis-engaged position into a position registering with the detent to restrain axial movement of the slide bar from the second position to the first position, the other mechanism includes a cam follower pin carried on a lever pivotable through a restricted arc about a fulcrum pin from and to a pre-determined position, and a pivotable cam plate formed with a cam slot co-acting with the cam follower pin such that pivoting of the lever from or to the predetermined position results in limited rotation of the cam plate and a flexible cable control assembly interconnecting the pawl on the one mechanism and the pivotable cam plate on the other mechanism to interlink the pivoting movements thereof such that with the lever in a position angularly displaced from the pre-determined position the resultant limited rotation of the cam plate is transmitted through the flexible cable control assembly to effect limited rotation of the pawl into register with the detent on the slide bar and with the lever in the pre-determined position the pawl is permitted to rotate under the influence of the resilient bias out of register with the detent.

The invention will now be described, by way of example, with reference to the accompanying, partly diagrammatic drawings, in which:

Figure 1 is a part sectioned elevation of mechanisms associated with an ignition key lock and an automatic gear selector lever interconnected by a flexible cable control assembly in a KEY OUT position; and

Figure 2 corresponds to Figure 1, but with the mechanisms in a RUN position.

Referring to the drawings the ignition key lock 10 is adapted to receive a key (not shown, for the sake of clarity) and is rotatable to a plurality of positions representing various functions including ACCESSORY, KEY OUT, OFF, RUN and START positions whilst the automatic gear selector 11 includes a bracket 12 and fulcrum pin 13A on which a lever 13 comprising a hollow, cylindrical, handle mounted on a flanged selector plate is pivoted between a plurality of positions including a PARK position and several drive positions the motion being transmitted to the gear train through a selector shaft (not shown) splined to the fulcrum pin. The handle of the hollow lever 13 carries a pawl 14 mounted on a release rod 20 and biassed resiliently upwardly, as viewed in the drawings, by a spring 21, alternatively engageable with notches 15, 16, 17, 18, 19 and 19A corresponding respectively to PARK, REVERSE gear, NEUTRAL, (DRIVE) gear, SECOND (intermediate) gear and FIRST (low speed) gear. The end of the release rod 20 extends through the hollow lever 13 and is adapted to be depressed manually for moving the pawl over climbing steps intermediate adjacent notches.

In the ignition key lock a key actuated device serves to drive a pinion gear 24 meshing with a rack gear 23 formed on a slide bar 22 reciprocable in a housing 21. The slide bar also engages a steering column shaft (not shown) to effect locking thereof against rotation when the key actuated device is in a KEY OUT position, only at which position is the key insertable or removable from the device.

A bell crank pawl 25 is pivotably mounted on a pin extending through the housing 21 with one arm 26 connected to a flexible inner core 27 forming part of a cable control assembly 31 and the other arm 28 resiliently biassed by a coil spring 25A out of engagement with a face 30 on the slide 22 formed with a recess 40 and a detent shoulder 41 engageable by an end 29 of the arm 28. The cable control assembly 31 is secured adjustably at one conduit termination 31A to the housing 21 and the other conduit termination 31B to a lug 32 on the bracket 12 of the automatic gear selector lever. The flexible inner core 27 projects beyond the conduit termination 31B and is connected to a projection 33 on a cam plate 34 pivoted on the lug 32.

The cam plate 34 is formed with an elongated arcuate slot 35 which co-acts with a cam follower pin 36 on the flanged sector plate of the lever 13 to effect rotation through a restricted arc of the cam plate 34 upon pivoting the lever about the fulcrum pin 13A and, in turn, to effect axial movement of the flexible inner core 27 in the control cable assembly 31.

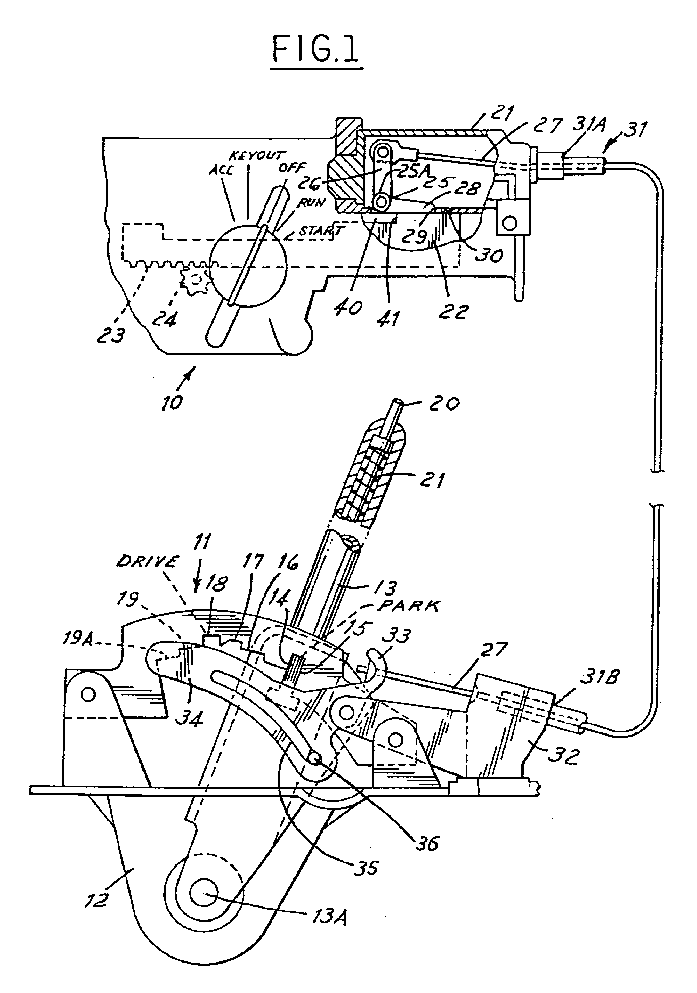

In operation, with the ignition key lock in the OFF position and the automatic gear selector lever in the PARK position, as shown in Figure 1, cam follower pin 36 occupies an end, straight, ramp portion of the slot 35 with the cam plate 34 in a first rotated position. The form of the end, straight, ramp portion of the arcuate slot 35 is such that, unless the cam plate is free to rotate toward the second position, the cam follower pin 36 cannot move in relation to the slot and hence the lever 13 cannot be displaced angularly from the PARK position.

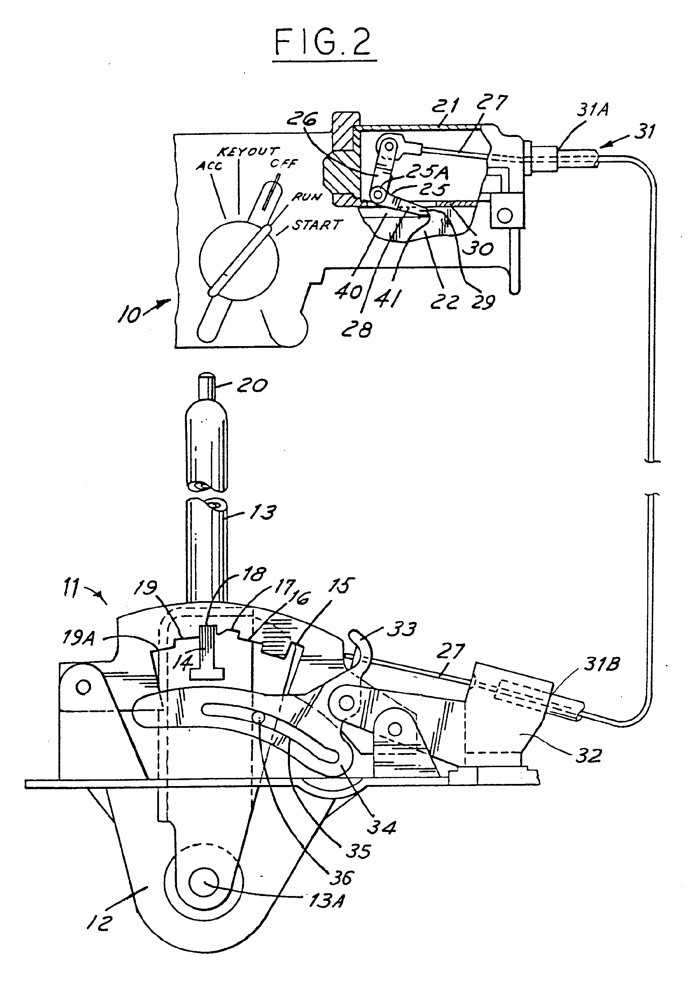

When the ignition key lock is moved to the RUN position as shown in Figure 2, the slide 22 is advanced by the effect of the pinion 24 and rack gear 23 to a position in which the arm 28 of the bell crank pawl 25, registers with the recess 40. Movement of the lever 13 to positions other than PARK may then be effected since the arm 28 of the pawl 25 is enabled to rotate into the recess 40, against the effect of the coil spring 25A, thereby permitting the flexible inner core 27 to move axially and thus enabling the cam plate 34 to be rotated by a corresponding amount to a second rotated position, allowing movement of the cam follower pin 36 along the arcuate slot 35 from the end, straight ramp portion. With the cam plate 34 in the second rotated position the arcuate slot 35 is positioned co-axially of the fulcrum pin such that the lever 13 is moveable readily between each of the REVERSE, NEUTRAL, DRIVE, SECOND and FIRST positions whilst maintaining tension in the flexible inner core sufficient to overcome the effect of the biassing coil spring 25A and maintain the configuration shown in Figure 2 with the arm 28 of the bell crank pawl 25 in contact with the recess 40.

In this configuration, with the bell crank pawl 25 in contact with the recess 40 and the lever 13 angularly displaced from the PARK position, full retraction of the slide in a direction corresponding to rotating the ignition key lock from the RUN position to the KEY OUT position is restrained by engagement of the detent shoulder 41 on the slide with the end 29 of the arm 28 of the bell crank pawl. Thus the ignition key lock device cannot be rotated to the KEY OUT position. However, upon moving the lever 13 to the PARK position the cam follower pin 36 is moved into the end, straight, ramp portion of the arcuate slot 35 thereby rotating the cam plate 34 to the first rotated position and relaxing the tension in the flexible inner core 27 sufficiently for the coil spring 25A to have effect and cause rotation of the arm 28 of the bell crank pawl 25 out of engagement with the recess 40, thereby permitting full retraction of the slide 22 and, consequently, rotation of the lock device to the KEY OUT position.

It will be appreciated that other configurations of the ignition key lock and the automatic gear selector lever may be utilised.

It will be appreciated that the arrangement is also applicable to other situations where two mechanisms require interlocking. Thus in a motor vehicle the interlock might be between the ignition key lock and a handbrake lever. Another application might be a manually operated mechanical switching device for a light railway system.

## Claims

1. A mechanical interlock device arranged to be effective to restrain movement of one positionable mechanism between a first position and a second position dependent upon the position of another, associated, positionable mechanism, characterised in that the one mechanism (10) includes a slide bar (22) axially reciprocable between the first and second positions and formed with a detent (41) on a face portion (30) thereof, and a pawl (25) pivotable against a resilient bias (25A) from a dis-engaged position into a position registering with the detent (41) to restrain axial movement of the slide bar (22) from the second position to the first position, the other mechanism (11) includes a cam follower pin (36) carried on a lever (13) pivotable through a restricted arc about a fulcrum pin (13A) from and to a pre-determined position, and a pivotable cam plate (34) formed with a cam slot (35) co-acting with the cam follower pin (36) such that pivoting of the lever (13) from or to the pre-determined position results in limited rotation of the cam plate (34), and a flexible cable control assembly (31) interconnecting the pawl (25) on the one mechanism (10) and the pivotable cam plate (34) on the other mechanism (11) to interlink the pivoting movements thereof such that with the lever (13) in a position angularly displaced from the pre-determined position the resultant limited rotation of the cam plate (34) is transmitted through the flexible cable control assembly (31) to effect limited rotation of the pawl (25) into register with the detent (41) on the slide bar (22) and with the lever (13) in the pre-determined position the pawl (25) is permitted to rotate under the influence of the resilient bias (25A) out of register with the detent.

2. A mechanical interlock device as claimed in Claim 1, characterised in that the cam slot (35) is formed with an arcuate portion and a ramp portion, the arcuate portion being co-axial with the fulcrum pin (13A) of the lever (13) in a second rotated position of the cam plate (34), and the ramp portion being adapted to co-act with the cam follower pin (36) such that angular displacement of the lever (13) from or to the pre-determined position is effective to rotate the cam plate (34) from or to a second rotated position angularly displaced from the first position.

3. A mechanical interlock device as claimed in Claim 1 or Claim 2, characterised in that a flexible inner core (27) of the flexible control cable assembly (31) is secured to a projection (33) on the cam plate (34) positioned to a side of the cam plate pivot remote from a portion of the cam plate formed with the cam plate slot (35).

4. A mechanical interlock device as claimed in any preceding claim, characterised in that the face portion (30) of the axially reciprocable slide bar (22) is formed with a recess (40) terminating in a shoulder constituting the detent (41), the pawl (25) being rotatable into the recess (40) to register with the detent (41) when the slide bar is in an advanced position or being restrained from rotation by bearing against the remaining face portion (30) when the slide bar (22) is in a retracted position.

5. A mechanical interlock device as claimed in any preceding claim, characterised in that the pawl (25) is formed as one arm (28) of a bell crank lever and a flexible inner core (27) of the flexible cable control assembly (31) is secured to the other arm (26) of the bell crank lever.

6. A mechanical interlock device as claimed in Claim 5, characterised in that a coil spring (25A) mounted on a pivot pin of the bell crank lever is formed with straight end portions respectively bearing against an arm (26) of the bell crank lever and a housing (21) resiliently to bias the pawl (25) toward the dis-engaged position.

7. A mechanical interlock device as claimed in any preceding claim, characterised in that the one mechanism includes a motor vehicle ignition key lock (10) in which a key is insertable into or removable from a lock device in one position of the device and the lock device is connected to rotate a pinion (24) meshing with a rack gear (23) fromed on the axially reciprocable slide bar (22).

8. A mechanical interlock device as claimed in Claim 7, characterised in that the axially reciprocable slide bar (22) is arranged to be engageable with a steering column shaft of the motor vehicle to effect locking thereof against rotation.

9. A mechanical interlock device as claimed in any preceding claim, characterised in that the other mechanism is a motor vehicle automatic gear selector lever (13) splined to a selector shaft at the fulcrum pin (13A) and the pre-determined position corresponds to a PARK configuration of an associated gear train.

**Patentansprüche**

1. Mechanische, gegenseitige Verriegelungsvorrichtung, die zur Verhinderung der Bewegung eines positionierbaren Mechanismus zwischen einer ersten Stellung und einer zweiten Stellung in Abhängigkeit von der Stellung eines anderen zugeordneten positionierbaren Mechanismus dient, gekennzeichnet durch folgende Merkmale:
der eine Mechanismus (10) umfaßt eine Schieberstange (22), die zwischen einer ersten und zweiten Stellung axial verschiebbar und mit einer Sperre (41) auf einem Oberflächenteil (30) versehen ist;
der Mechanismus (10) umfaßt außerdem einen Klinkenhebel (25), der gegen Federvorspannung (25A) aus einer Außer-Eingriff-Stellung in eine Überdeckungsstellung mit der Sperre (41) verschwenkbar ist, um die axiale Verschiebung der Schieberstange (22) aus der zweiten Stellung in die erste Stellung zu verhindern;
der andere Mechanismus (11) umfaßt einen Nockenfolgerstift (36), der von einem Hebel (13) getragen wird, der über einen beschränkten Bogen um einen Angelstift (13A) aus und in eine vorbestimmte Stellung verschwenkbar ist;
der weitere Mechanismus (11) umfaßt auch eine schwenkbare Nockenplatte (34), die mit einem Nockenschlitz (35) geformt ist, der mit dem Nockenfolgerstift (36) so zusammenarbeitet, daß die Schwenkung des Hebels (13) aus oder in die vorbestimmte Stellung zu einer beschränkten Drehung der Nockenplatte (34) führt;
ein flexibler Seilzug (31) verbindet den Klinkenhebel (25) an dem einen Mechanismus (10), mit der schwenkbaren Nockenplatte (34) am anderen Mechanismus (11), um die Schwenkbewegungen so miteinander zu verketten, daß, wenn der Hebel (13) in einer aus der vorbestimmten Stellung winkelmäßig verschobenen Stellung steht, die sich ergebende, beschränkte Schwenkung der Nockenplatte (34) über den flexiblen Seilzug (31) übertragen wird und zu einer bescchränkten Schwenkung des Klinkenhebels (25) in Überdeckung mit der Sperre (41) auf der Schieberstange (22) führt, und, wenn der Hebel (13) in der vorbestimmten Stellung steht, es dem Klinkenhebel (25) ermöglicht wird, unter dem Einfluß der Federvorspannung (25A) außer Überdeckung mit der Sperre zu schwenken.

2. Gegenseitige mechanische Verriegelungsvorrichtung nach Anspruch 1,
dadurch gekennzeichnet,
daß der Nockenschlitz (35) mit einem bogenförmigen Teil und einem Rampenteil geformt ist,
daß der bogenförmige Teil koaxial zu dem Angelstift (13H) des Hebels (13) in einer zweiten, verschwenkten Position der Nockenplatte (34) steht und
daß der Rampenteil zur Zusammenarbeit mit dem Nockenfolgerstift (36) in der Weise ausgebildet ist, daß die winkelmäßige Verschiebung des Hebels (13) aus oder in die vorbestimmte Stellung wirksam ist, die Nockenplatte (34) aus oder in eine zweite gedrehte Stellung zu schwenken, die winkelmäßig von der ersten Stellung verschoben ist.

3. Gegenseitige mechanische Verriegelungsvorrichtung nach Anspruch 1 oder 2,
dadurch gekennzeichnet,
daß ein biegsamer innerer Kern (27) des Seilzugs (31) mit einem Vorsprung (33) auf der Nockenplatte (34) verbunden ist, die auf einer Seite der Nockenplattenschwenkachse entfernt von einem Teil der Nockenplatte angeordnet ist, die mit dem Nockenplattenschlitz (35) ausgebildet ist.

4. Gegenseitige mechanische Verriegelungsvorrichtung nach einem der vorhergehenden Ansprüche,
dadurch gekennzeichnet,
daß die Vorderseite (30) der axial hin- und hergehenden Schieberstange (22) mit einer Aussparung (40) versehen ist, die in einer Schulter endet, welche die Sperre (41) darstellt und
daß der Klinkenhebel (25) in die Aussparung (40) zur Überdeckung mit der Aussparung (41) drehbar ist, wenn die Schieberstange in einer vorgerückten Stellung ist oder daß der Klinkenhebel gegen Drehung durch Anlage an dem verbleibenden Vorderteil (30) gehindert wird, wenn die Schieberstange (22) in einer rückgezogenen Stellung ist.

5. Gegenseitige mechanische Verriegelungsvorrichtung nach einem der vorhergehenden Ansprüche,
dadurch gekennzeichnet,
daß der Klinkenhebel (25) als ein Arm (28) eines Winkelhebels ausgebildet ist und
daß ein flexibler innerer Kern (27) des flexiblen Seilzugs (31) an dem anderen Arm (26) des Winkelhebels befestigt ist.

6. Gegenseitige mechanische Verriegelungsvorrichtung nach Anspruch 5,
dadurch gekennzeichnet,

daß eine Schraubenfeder (25A) auf einem Schwenkstift des Winkelhebels befestigt ist und mit geraden Endteilen jeweils an einem Arm (26) des Winkelhebels und einem Gehäuse (21) federnd ansetzt, um den Klinkenhebel (25) in die Außer-Eingriff-Lage zu drängen.

7. Gegenseitige mechanische Verriegelungsvorrichtung nach einem der vorhergehenden Ansprüche,
dadurch gekennzeichnet,
daß der eine Mechanismus das Zündschloß (10) eines Motorfahrzeugs umfaßt, in welchem ein Schlüssel in und aus einer Verriegelungsvorrichtung in eine Stellung der Vorrichtung einfügbar ist, und
daß das Schloß mit einem Ritzel (24) zu dessen Drehung verbunden ist, das mit einer Zahnstange (23) kämmt, welche auf der axial hin- und herverschiebbaren Schieberstange (22) angeformt ist.

8. Gegenseitige mechanische Verriegelungsvorrichtung nach Anspruch 7,
dadurch gekennzeichnet,
daß die axial hin und her verschiebbare Schieberstange (22) zum Eingriff mit der Welle einer Steuersäule des Motorfahrzeugs angeordnet ist, um die Verriegelung gegen Drehung zu bewirken.

9. Gegenseitige mechanische Verriegelungsvorrichtung nach einem der vorhergehenden Ansprüche,
dadurch gekennzeichnet,
daß der andere Mechanismus der Wahlhebel (13) des automatischen Getriebes eines Motorfahrzeugs ist und daß der Hebel mit einer Wahlwelle an dem Angelstift (13A) keilverzahnt ist und
daß die vorbestimmte Stellung einer Parkkonfiguration eines zugeordneten Getriebezuges entspricht.

## Revendications

1. Dispositif de verrouillage mécanique réciproque destiné à restreindre le mouvement d'un mécanisme positionnable entre une première position et une seconde position en fonction de la position d'un autre mécanisme positionnable, associé, caractérisé en ce que le premier mécanisme (10) comprend une barre de glissement (22) pouvant aller et venir axialement entre la première et la seconde position et dotée d'un arrêt (41) sur une portion de face (30), et d'un cliquet (25) pivotant à l'encontre d'une sollicitation élastique (25A) d'une position dégagée à une position coïncidant avec l'arrêt (41) pour limiter le déplacement axial de la barre de glissement (22) de la seconde position à la première position, l'autre mécanisme (11) comprend une tige de contre-came (36) supportée sur un levier (13) pivotant sur un arc restreint selon un axe d'articulation (13A) depuis et vers une position prédéterminée, et une plaque de came pivotante (34A) dotée d'une fente de came (35) coopérant avec la tige de contrecame (36) de manière que le pivotement du levier (13) depuis et vers la position prédéterminée entraîne une rotation limitée de la plaque de came (34), et un ensemble de commande par câble (31) flexible reliant mutuellement le cliquet (25) sur le premier mécanisme et la plaque de came pivotante (34) sur l'autre mécanisme (11) pour interconnecter leurs mouvements pivotants de manière qu'avec le levier (13) dans une position déplacée angulairement depuis la position prédéterminée la rotation limitée résultante de la plaque de came (34) soit transmise via la commande par câble flexible pour effectuer une rotation limitée du cliquet (25) pour qu'il coïncide avec l'arrêt (41) sur la barre de glissement (22) et qu'avec le levier (13) dans la position prédéterminée le cliquet (25) puisse tourner sous l'effet de la sollicitation élastique (25A) pour ne plus coïncider avec l'arrêt.

2. Dispositif de verrouillage mécanique réciproque selon la revendication 1, caractérisé en ce que la fente de came (35) est dotée d'une portion arquée et d'une portion en déclivité, la portion arquée étant co-axiale à l'axe d'articulation (13a) du levier (13) dans une seconde position de rotation de la plaque de came (34), et la portion en déclivité étant adaptée à coopérer avec la tige de suiveur de came (36) de manière que le déplacement angulaire du levier (13) depuis ou vers la position prédéterminée serve à faire tourner la plaque de came (34) depuis ou vers une seconde position de rotation angulairement déplacée depuis la première position de rotation.

3. Dispositif de verrouillage mécanique réciproque selon la revendication 1 ou 2, caractérisé en ce qu'un coeur interne flexible (27) de la commande par câble flexible (31) est fixé à une projection (33) sur la plaque de came (34) positionnée sur un côté du pivot de la plaque de came loin d'une portion de la plaque de came dotée de la fente de came (35).

4. Dispositif de verrouillage mécanique réciproque selon l'une quelconque des revendications précédentes, caractérisé en ce que la portion de face (30) de la barre de glissement (22) allant et venant axialement est dotée d'un évidement (40) se terminant dans un épaulement constituant l'arrêt (41), le cliquet (25) pouvant tourner dans l'évidement (40) pour coïncider avec l'arrêt (41) lorsque la barre de glissement (22) se trouve dans une position avancée ou étant empêché de tourner en portant contre la portion de face restante (30) lorsque la barre de glissement (22) est dans une position rétractée.

5. Dispositif de verrouillage mécanique réciproque selon l'une quelconque des revendications précédentes, caractérisé en ce que le cliquet (25) est formé d'un bras (28) d'un levier coudé et un coeur interne flexible (27) de la commande par câble flexible (31) est fixé à l'autre bras (26) du levier coudé.

6. Dispositif de verrouillage mécanique réciproque selon la revendication 5, caractérisé en ce qu'un ressort à boudin (25A) monté sur un pivot du levier coudé est doté de portions d'extrémité droites portant respectivement contre un bras (26) du levier coudé et un boîtier (21) pour solliciter élastiquement le cliquet (25) vers la position dégagée.

7. Dispositif de verrouillage mécanique réciproque selon l'une quelconque des revendications précédentes, caractérisé en ce que le premier mécanisme comprend une serrure de contact (10) de véhicule moteur dans laquelle une clé peut être insérée ou d'où elle peut être enlevée dans une position du dispositif et le dispositif de serrure est relié pour faire tourner un pignon (24) s'engrenant avec une crémaillère (23) formée sur la barre de glissement (22) allant et venant axialement.

8. Dispositif de verrouillage mécanique réciproque selon la revendication 7, caractérisé en ce que la barre de glissement (22) allant et venant axialement est agencée pour pouvoir être engagée avec un arbre de colonne de direction du véhicule moteur pour empêcher cet arbre de tourner.

9. Dispositif de verrouillage mécanique réciproque selon l'une quelconque des revendications précédentes, caractérisé en ce que l'autre mécanisme est un sélecteur de vitesse automatique (13) de véhicule moteur claveté à un arbre de sélecteur à l'axe d'articulation (13A) et la position prédéterminée correspond à une configuration de STATIONNEMENT d'un train d'engrenages associé.

EP 0 334 672 B1

# FIG.1

7

# FIG.2